Europäisches Patentamt

European Patent Office

Office européen des brevets

(11) Veröffentlichungsnummer: **0 176 725**
A2

# (12) EUROPÄISCHE PATENTANMELDUNG

(21) Anmeldenummer: 85110311.9

(22) Anmeldetag: 17.08.85

(51) Int. Cl.⁴: **A 01 B 63/112**
G 01 L 3/10

(30) Priorität: 22.09.84 DE 3434824

(43) Veröffentlichungstag der Anmeldung:
09.04.86 Patentblatt 86/15

(84) Benannte Vertragsstaaten:
DE FR GB IT

(71) Anmelder: ROBERT BOSCH GMBH
Postfach 50
D-7000 Stuttgart 1(DE)

(72) Erfinder: Hesse, Horst, Dr. Dipl.-Ing.
Auberlenweg 13b
D-7000 Stuttgart 1(DE)

(72) Erfinder: Schrader, Wolfgang, Dipl.-Ing.
Heilbronner Strasse 11
D-7141 Beilstein(DE)

(54) Einrichtung zum Regeln der Zugkraft eines an einem landwirtschaftlichen Arbeitsfahrzeug angehängten Arbeitsgeräts.

(57) Bei einer Einrichtung zum Regeln der Zugkraft eines an einem Schlepper (11) angehängten Pflugs (14) wird das vom Motor (37) des Schleppers (11) auf seine Antriebsachse (43) übertragene Antriebsdrehmoment mit Hilfe eines ortsfesten Sensors (35) gemessen. Dieser arbeitet nach der sogenannten Wirbelstrommeßtechnik mit konzentrisch angeordneten Schlitzhülsen (47, 48). Die Einrichtung baut einfach, kompakt und ist für den rauhen landwirtschaftlichen Einsatz geeignet.

EP 0 176 725 A2

./...

FIG. 1

R. 19633

13.9.1984 Sf/Pi

ROBERT BOSCH GMBH, 7000 Stuttgart 1

Einrichtung zum Regeln der Zugkraft eines an einem
landwirtschaftlichen Arbeitsfahrzeug angehängten Arbeitsgeräts

Stand der Technik

Die Erfindung geht aus von einer Einrichtung nach der
Gattung des Hauptanspruchs. Es ist eine Einrichtung
bekannt, bei der die Zugkraft über das Drehmoment in
der Triebwelle eines Schleppers ermittelt wird. Dieses Drehmoment wird mechanisch, z. B. mit Hilfe eines
Kettenwandlers, über mehrere Zwischenglieder übertragen. Dabei treten Hystereseverluste durch Reibung auf,
und es lassen sich Schwankungen in der erforderlichen
Zugkraft nicht vermeiden.

Ferner ist ein Wirbelstromsensor zur Messung des Drehmoments bekannt. Dieser ist aber bisher nur bei Kraftfahrzeugen zur Bestimmung des Fahrverhaltens benutzt
worden.

Vorteile der Erfindung

Die erfindungsgemäße Einrichtung mit dem kennzeichnenden
Merkmalen des Hauptanspruchs hat demgegenüber den Vorteil,

...

daß das Drehmoment ohne direkte Berührung der Trietwelle einfach und mit geringem Bauaufwand bestimmt werden kann und zur Zugkraftregelung bei konstanter Arbeitstiefe des Pflugs verwendbar ist. Die Einrichtung ist unempfindlich gegen Temperatur und Verschmutzung und dadurch für den rauhen Einsatz bei landwirtschaftlichen Arbeitsfahrzeugen gut geeignet. Die Meßfehler sind gering. Es sind auch kleine Drehmomente gut auswertbar.

Durch die in den Unteransprüchen aufgeführten Maßnahmen sind vorteilhafte Weiterbildungen und Verbesserungen der im Hauptanspruch angegebenen Einrichtung möglich. Insbesondere in den Ansprüchen 2 bis 5 sind vorteilhafte Anordnungsmöglichkeiten des Sensors zur Bestimmung des Drehmoments angegeben.

Zeichnung

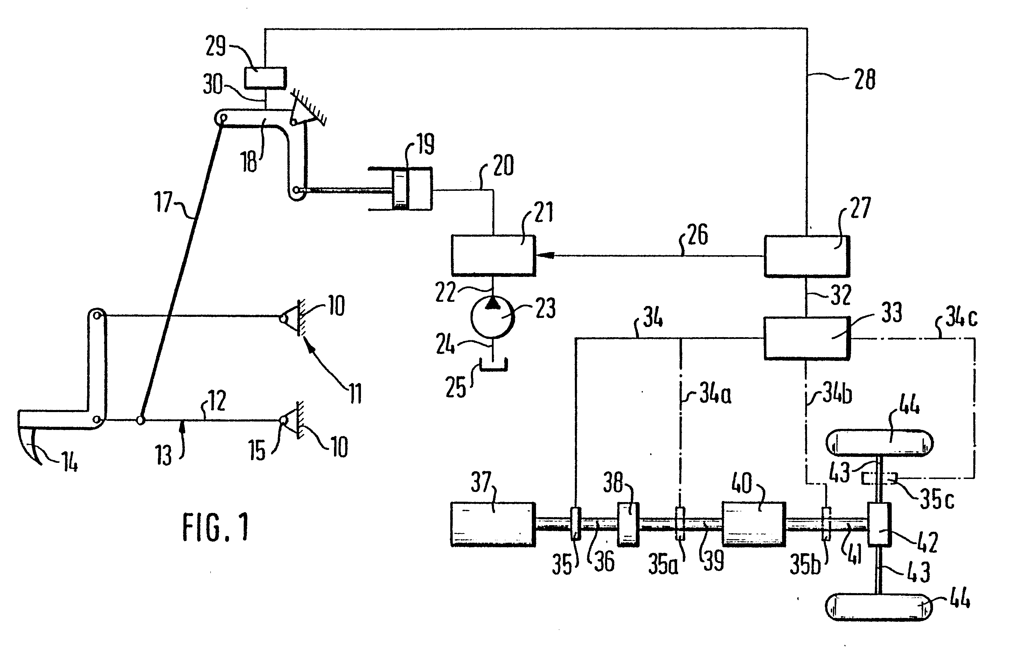

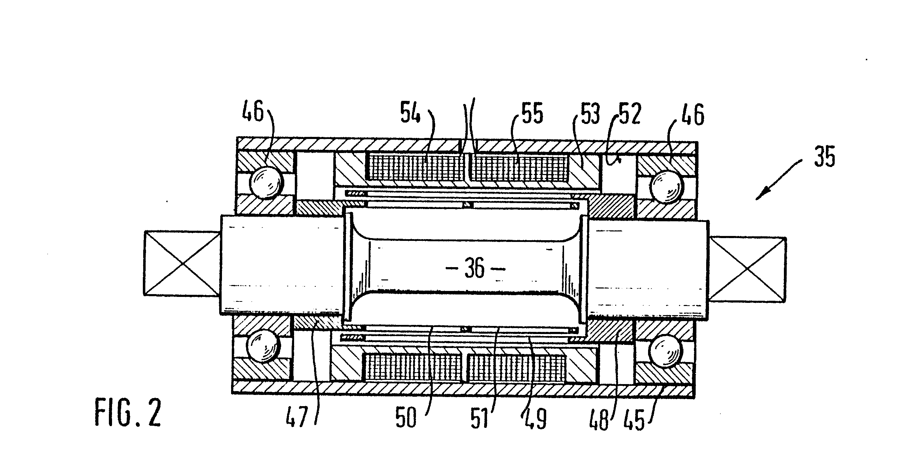

Ein Ausführungsbeispiel der Erfindung ist in der Zeichnung dargestellt und in der nachfolgenden Beschreibung näher erläutert. Es zeigen Figur 1 eine Einrichtung für die Zugkraftregelung eines landwirtschaftlichen Arbeitsgeräts in vereinfachter Darstellung und die Figur 2 einen Längsschnitt durch einen Drehmomentsensor.

Beschreibung des Ausführungsbeispiels

Am Gehäuse 10 eines nicht näher dargestellten Schleppers 11 ist mit Hilfe eines Unterlenkers 12 eines üblichen Dreipunktgestänges 13 ein Pflug 14 angelenkt. Der Unterlenker 12 ist mit Hilfe eines Bolzens 15 am Gehäuse 10 schwenkbar gelagert und steht ferner über eine Hubstange 17 und einen gehäusefest gelagerten Hubarm 18 mit einem

...

hydraulisch beaufschlagten Kraftheber 19 in Wirkverbindung. Dadurch ist der Pflug 14 heb- und senkbar. Zum Heben und Senken des Pflugs 14 ist der Kraftheber 19 über eine Steuerleitung 20 mit einer elektrohydraulischen Steuereinrichtung 21 verbunden. Von dieser führt eine Zulaufleitung 22 zu einer Hydropumpe 23, die über eine Leitung 24 Druckmittel aus einem Tank 25 ansaugt. Die Steuereinrichtung 21 steht über eine elektrische Steuerleitung 26 mit einer elektronischen Regeleinrichtung 27 in Wirkverbindung. Von dieser führt eine elektrische Leitung 28 zu einer Lagemeßeinrichtung 29, die über einen Signalgeber 30 mit dem Hubarm 18 verbunden ist.

Ferner zweigt von der Regeleinrichtung 27 eine elektrische Leitung 32 zu einem Verstärker 33 ab, der über eine elektrische Leitung 34 mit einem Drehmomentsensor 35 verbunden ist. Der Drehmomentsensor 35 ist im Bereich einer Welle 36 zwischen dem Motor 37 und der Kupplung 38 des Schleppers 11 angeordnet. Eine Welle 39 verbindet die Kupplung 38 mit dem nachgeschalteten Schleppergetriebe 40, und von diesem führt eine Welle 41 zum Differential 42, das an der Hinterachse 43 des Schleppers 11 angeordnet ist.

In der Figur 1 sind mit den Buchstaben a bis c drei zusätzliche Möglichkeiten zum Anordnen des Drehmomentsensors 35 bezeichnet. Dabei ist ein Drehmomentsensor 35a zwischen der Kupplung 38 und dem Getriebe 40 im Bereich der Welle 39, ein Drehmomentsensor 35b zwischen dem Getriebe 40 und dem Differential 42 im Bereich der Welle 41 oder ein Drehmomentsensor 35c zwischen dem Differential 42 und einem Hinterrad 44 an der Hinterachse 43 angeordnet. Diese Möglichkeiten sind strichpunktiert eingezeichnet.

...

Der Drehmomentsensor 35 arbeitet nach dem sogenannten Wirbelstrommeßverfahren und ist in Figur 2 näher dargestellt. Er hat ein hülsenförmiges Gehäuse 45, das mit Hilfe von Kugellagern 46 auf der Welle 36 gelagert ist. Die Welle 36 ist im Bereich des Gehäuses 45 als Torsionswelle ausgebildet. Innerhalb des Gehäuses 45 sind auf der Welle 36, sich jeweils an die Kugellager 46 anschließend, eine innere (47) und eine äußere (48) Schlitzhülse angeordnet. Die äußere Schlitzhülse 48 weist in Längsrichtung eingefräste Schlitze 49 auf. Bei der inneren Schlitzhülse 47 sind zwei Schlitzreihen 50, 51 ausgebildet, die jeweils um eine Schlitzbreite zueinander versetzt sind. Sie verlaufen ebenfalls in Längsrichtung der inneren Schlitzhülse 47, wobei ihre Länge in etwa der halben Länge der Schlitze 49 der äußeren Schlitzhülse 48 entsprechen. Konzentrisch zu den beiden Schlitzhülsen 47, 48 befindet sich an der Innenwandung 52 des Gehäuses 45 ein Spulenkörper 53, auf dem zwei Spulen 54, 55 angeordnet sind.

Wird vom Motor 37 auf die Hinterräder 44 ein Drehmoment übertragen, so wird die Welle 36 im Bereich des Gehäuses 45 leicht tortiert. Dadurch wird eine Schlitzreihe 50 der inneren Schlitzhülse 47 durch die äußere Schlitzhülse 48 überdeckt, während die andere Schlitzreihe 51 der inneren Schlitzhülse 47 sich öffnet bzw. umgekehrt. Als Folge davon wird in den beiden Spulen 54, 55 ein gegensinniges Meßsignal erzeugt, das in einer nicht dargestellten herkömmlich bekannten Halbbrückenschaltung zu einem doppelten Ausgangssignal führt. Es wäre auch nur eine einzige Spule möglich, aber durch zwei Spulen ist eine besonders genaue und störunempfindliche Messung möglich. Alle gegensinnigen Einflüsse durch Temperatur und Störfelder werden kompensiert. Dieses Ausgangssignal wird im Verstärker 33 verstärkt und der elektronischen Regelein-

...

- 5 -

richtung 27 zugeleitet. In diese Regeleinrichtung 27 wird auch der von der Lagemeßeinrichtung 29 ermittelte Lagewert des Hubarms 18, d.h. die Arbeitstiefe des Pflugs 14, übertragen.

Angestrebt ist eine möglichst konstante Arbeitstiefe des Pflugs 14 während des gesamten Arbeitsvorgangs. Diese Arbeitstiefe soll auch bei wechselnden Bodenqualitäten - weicher oder härter - und Unebenheiten der Bodenoberfläche - insbesondere Berg- und Talfahrt - konstant sein. Diese Arbeitstiefe soll nun abhängig von dem vom Motor 37 auf die Hinterachse 43 übertragenen Drehmoment, d.h. von der Zugkraft des Schleppers 11, geregelt werden. Bei konstanter Zugkraft würde sich die Arbeitstiefe des Pflugs 14 bei Änderungen der Bodenverhältnisse ebenfalls verändern, deshalb muß die Zugkraft diesen Änderungen angeglichen werden. Dazu wird in der Regeleinrichtung 27 ein Sollwert der Arbeitstiefe des Pflugs 14 vorgegeben, der mit dem durch die Lagemeßeinrichtung 29 bestimmten Istwert verglichen wird. Gleichzeitig wird der vom Drehmomentsensor 35 bestimmte Wert der Zugkraft in die Regeleinrichtung 27 gemeldet. Die Regeleinrichtung 27 vergleicht nun den vorgegebenen Sollwert und den momentanen Istwert der Arbeitstiefe. Ändern sich nun die Bodenverhältnisse, d.h. weicht der Istwert vom Sollwert ab, so wird die Zugkraft des Schleppers 11 entsprechend erhöht bzw. verringert, bis der vorgegebene Sollwert wieder erreicht ist. Die Zugkraft wird also mit Hilfe des Drehmomentsensors 35 geregelt. Umgekehrt können auch Änderungen der Zugkraft durch Verändern der Stellung des Pflugs 14 mit Hilfe der Steuereinrichtung 21 ausgeglichen werden.

Durch die Ermittlung des Drehmoments ist eine besonders exakte Arbeitstiefenregelung des Pflugs 14 möglich. Es

...

1963 0176725

können dabei auch der Schlupf des Triebrads und größere Bodenneigungen, z. B. Bergfahrten, mitberücksichtigt werden. Es hat sich als besonders vorteilhaft erwiesen, den Drehmomentsensor 35 zwischen Motor 37 und Getriebe 40 anzuordnen. Selbstverständlich ist es auch möglich, mehrere Drehmomentsensoren 35 an verschiedenen Stellen anzuordnen, d.h. die in Figur 1 eingezeichneten Möglichkeiten miteinander zu kombinieren, und deren Ausgangssignale zu einem Gesamtmeßwert zu überlagern.

0176725

R. 19633
13.9.1984 Sf/Pi

ROBERT BOSCH GMBH, 7000 Stuttgart 1

Ansprüche

1. Einrichtung zum Regeln der Zugkraft eines an einem landwirtschaftlichen Arbeitsfahrzeug (11), insbesondere eines Schleppers, angehängten Arbeitsgeräts (14), insbesondere eines Pflugs, mit einer hydraulischen Steuereinheit (21) und einer elektronischen Regeleinrichtung (27), wobei zum Regeln das zwischen dem Motor (37) des Arbeitsfahrzeugs (11) und dessen Antriebsachse (43) gemessene Antriebsdrehmoment benutzt wird, dadurch gekennzeichnet, daß zur Messung des Antriebsdrehmoments mindestens ein nach der Wirbelstrommeßtechnik arbeitender Sensor (35) verwendet wird.

2. Einrichtung nach Anspruch 1, dadurch gekennzeichnet, daß der Sensor (35) zwischen dem Motor (37) und der Kupplung (38) des Arbeitsfahrzeugs (11) angeordnet ist.

3. Einrichtung nach Anspruch 1, dadurch gekennzeichnet, daß der Sensor (35) zwischen der Kupplung (38) und dem Getriebe (40) des Arbeitsfahrzeugs (11) angeordnet ist.

4. Einrichtung nach Anspruch 1, dadurch gekennzeichnet, daß der Sensor (35) zwischen dem Getriebe (40) und dem Differential (42) des Arbeitsfahrzeugs (11) angeordnet ist.

...

- 2 -

19633
0176725

5. Einrichtung nach Anspruch 1, dadurch gekennzeichnet, daß der Sensor (35) auf der Hinterachse (43) des Arbeitsfahrzeugs (11) zwischen dem Differential (42) und einem Rad (44) angeordnet ist.

6. Einrichtung nach einem der Ansprüche 1 bis 5, dadurch gekennzeichnet, daß der Sensor (35) ortsfest angeordnet ist.

7. Einrichtung nach einem der Ansprüche 1 bis 6, dadurch gekennzeichnet, daß der Sensor (35) ein hülsenförmiges Gehäuse (45) hat, das mit Hilfe von Lagern (46) auf einer Antriebswelle (36) des Arbeitsfahrzeugs (11) angeordnet ist, daß der Sensor (35) zwei radial zueinander bewegliche Hülsen (47, 48) hat, daß die erste Hülse (48) Längsschlitze (49) aufweist, daß die zweite Hülse (47) zwei Reihen von Längsschlitzen (50, 51) hat, die um eine Schlitzbreite zueinander versetzt sind, und daß im Bereich der Längsschlitze (49, 50, 51) der beiden Hülsen (47, 48) wenigstens eine Spule (54) mit einem Spulenkörper (53) angeordnet ist.

8. Einrichtung nach Anspruch 7, dadurch gekennzeichnet, daß die Längsschlitze (49, 50, 51) der beiden Hülsen (47, 48) gleich breit sind.

0176725

FIG. 1

FIG. 2